# EUROPÄISCHE PATENTSCHRIFT

(11) **EP 2 050 641 B1**
(45) Veröffentlichungstag und Bekanntmachung des Hinweises auf die Patenterteilung: **15.06.2011**
(21) Anmeldenummer: 08016413.0
(22) Anmeldetag: 18.09.2008
(51) Int. Cl.: B60W 20/00, F16D 48/06

(54) **Hybridfahrzeug**
Hybrid vehicle
Véhicule hybride

(30) Priorität: 20.10.2007 DE 102007050229
(43) Veröffentlichungstag der Anmeldung: 22.04.2009
(73) Patentinhaber: Bayerische Motoren Werke Aktiengesellschaft, 80809 München (DE)
(72) Erfinder: Ehrmaier, Rudolf, 81927 München (DE); Stempel, Christian, 84036 Landshut (DE); Gollmer, Roland, 82140 Olching (DE)

(56) Entgegenhaltungen:
- EP-A2- 1 177 931
- DE-A1- 10 260 435
- US-A1- 2006 089 232

## Beschreibung

Die vorliegende Erfindung betrifft ein Hybridfahrzeug mit einem Automatikgetriebe gemäß dem Oberbegriff des Patentanspruches 1.

Unter einem Hybridfahrzeug wird ein Fahrzeug mit einem Verbrennungsmotor und mindestens einer elektrischen Maschine verstanden, die dazu vorgesehen ist, Antriebsleistung zum Antrieb des Fahrzeugs zu erzeugen, wobei die elektrische Maschine den Verbrennungsmotor beim Antrieb des Fahrzeugs unterstützt oder das Fahrzeug rein elektrisch antreibt. Bei Hybridfahr-zeugen, bei denen die elektrische Maschine den Verbrennungs-motor lediglich unterstützt spricht man von "Mild-Hybrids", bei Hybridfahrzeugen, bei denen auch ein rein elektrisches Fahren möglich ist, von "Full-Hybrids". Bei so genannten "Parallel Hybridkonzepten" ist die elektrische Maschine im Antriebsstrang im Bereich zwischen dem Verbrennungsmotor und dem Getriebe angeordnet, wobei das elektrisch erzeugte Drehmoment dem verbrennungsmotorisch erzeugten Drehmoment überlagert werden kann.

Automatikgetriebe weisen mehrere Aktuatoren in Form von Kupplungen bzw. Bremsen auf, die elektrisch durch eine elektronische Getriebesteuerung angesteuert werden. Die meisten Automatikgetriebe weisen ferner eine mechanisch über die Getriebeeingangswelle angetriebene Ölpumpe auf. Zusätzlich kann eine elektrisch angetriebene Ölpumpe vorgesehen sein.

Dokument EP 1 177 931, das als nächstliegender Stand der Technik angesehen wird, offenbart ein bekanntes Hybridfahrzeug.

Beim Ausfall der elektronischen Getriebesteuerung oder bei Störungen einzelner Getriebeaktuatoren öffnen bei herkömmlichen Automatikgetrieben die Kupplungen bzw. Bremsen des Getriebes, was dazu führt, dass der Kraftschluss im Getriebe verloren geht und kein Drehmoment mehr übertragen werden kann. Das Fahrzeug rollt somit aus und eine Weiterfahrt bzw. ein Anfahren aus dem Stand heraus ist nicht mehr möglich.

Aufgabe der Erfindung ist es, ein Hybridfahrzeug mit einem Automatikgetriebe zu schaffen, bei dem bei einem Ausfall bzw. einer Störung der Getriebesteuerung eine Weiterfahrt zumindest in einem "Notbetrieb" möglich ist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Hybridfahrzeug mit einem Verbrennungsmotor und einem Automatikgetriebe, das eine elektrische Getriebesteuerung aufweist, welche mehrere Getriebeaktuatoren ansteuert. Im Antriebsstrang zwischen dem Verbrennungsmotor und dem Automatikgetriebe ist eine elektrische Maschine und eine Trennkupplung angeordnet. Bei geschlossener Trennkupplung ist die elektrische Maschine mit dem Verbrennungsmotor gekoppelt. Durch Öffnen der Trennkupplung kann der Verbrennungsmotor vom Antriebsstrang abgekoppelt werden, was dann ein rein elektrisches "Fahren" ermöglicht. Auf der dem Automatikgetriebe zugewandten Seite der elektrischen Maschine ist im Antriebsstrang ferner eine Anfahrkupplung angeordnet. Zum Anfahren aus dem Stand heraus wird die Anfahrkupplung langsam geschlossen.

Der Kern der Erfindung besteht darin, dass bei einer in der Getriebesteuerung bzw. in den Getriebeaktuatoren auftretenden Störung aus einem Fahrzustand heraus, in dem die Trennkupplung und die Anfahrkupplung geschlossen ist, die Trennkupplung mittels einer Trennkupplungshaltehydraulik und die Anfahrkupplung mittels einer Anfahrkupplungshaltehydraulik in geschlossenen Zustand gehalten werden. Dadurch ist sicher gestellt, dass bei einer Getriebestörung zumindest weiter gefahren werden kann.

Es kann vorgesehen sein, dass das Getriebe bei Vorliegen einer Getriebestörung selbsttätig mechanisch bzw. hydraulisch in einen Notlaufzustand geschaltet wird, d. h. in einen vorgegebenen "Notlaufgang".

Nach einer Weiterbildung der Erfindung kann vorgesehen sein, dass die Trennkupplungshaltehydraulik die Trennkupplung im Notbetrieb öffnet bzw. freigibt, wenn die Drehzahl des Verbrennungsmotors eine vorgegebene Drehzahl von z. B. 1.001/min unterschreitet, so dass der Verbrennungsmotor vom Antriebsstrang abgekoppelt wird.

Wie bereits erwähnt, ist bei Automatikgetrieben üblicherweise eine von der Getriebeeingangswelle angetriebene mechanische Ölpumpe vorgesehen, die auch die Anfahrkupplungshydraulik mit dem zum Schließen bzw. zum geschlossen Halten der Anfahrkupplung erforderlichen Öldruck versorgt. Nach einer Weiterbildung der Erfindung ist zusätzlich zu der mechanisch angetriebenen Ölpumpe eine elektrische Ölpumpe vorgesehen, welche spätestens kurz vor dem Öffnen der Trennkupplung Öldruck zur Versorgung der Anfahrkupplungshaltehydraulik erzeugt, so dass die Anfahrkupplung auch nach dem Öffnen der Trennkupplung geschlossen gehalten werden kann. Zur Versorgung der elektrischen Ölpumpe kann ein "High-Side-Switch" in der Getriebesteuerung vorgesehen sein. Die Ansteuerung der elektrischen Ölpumpe kann gegebenenfalls durch ein weiteres Steuergerät, d. h. durch ein Steuergerät, das nicht das Getriebesteuergerät ist, erfolgen. Zur Spannungsversorgung der elektrischen Ölpumpe kann eine zweite Batterie vorgesehen sein.

Wenn der Verbrennungsmotor nach dem Öffnen der Trennkupplung vom Antriebsstrang abgekoppelt ist, kann das Fahrzeug im Notbetrieb nur noch von der elektrischen Maschine angetrieben werden.

Wenn das Fahrzeug abgestellt werden soll, wird über die Zündung des Fahrzeugs die elektrische Ölpumpe abgeschaltet. Dadurch wird auch die hydraulische Haltefunktion der Anfahrkupplung im Getriebe gelöst. Die Kupplungen bzw. Bremsen des Automatikgetriebes öffnen sich dann und es besteht kein Kraftschluss mehr. Gleichzeitig wird die hydraulische Haltefunktion für das offen Halten der Getriebeparksperre gelöst. Das Getriebe geht also in einen Parkzustand über, wodurch das Fahrzeug gegen Wegrollen gesichert ist.

Mit der oben beschriebenen Anordnung ist bei einer Störung des Getriebes bzw. der Getriebesteuerung oder der Getriebeaktuatorik zumindest eine Weiterfahrt in einem Notbetrieb vorwärts möglich. Aus dem Stillstand heraus ist auch ein rein elektrisches Wiederanfahren möglich. Somit kann das Fahrzeug im Notbetrieb zumindest noch "aus eigener Kraft" bis zu einer sicheren Stelle gefahren und abgestellt werden.

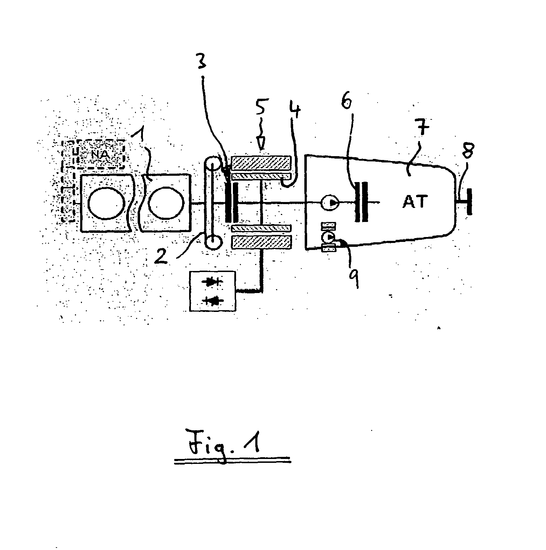

Im Folgenden wird die Erfindung im Zusammenhang mit der Zeichnung näher erläutert. Die einzige Figur 1 zeigt ein Hybridkonzept gemäß der Erfindung.

Figur 1 zeigt ein Hybridfahrzeugkonzept mit einem Verbrennungsmotor 1, der über einen Torsionsschwingungsdämpfer bzw. ein Zweimassenschwungrad 2 und eine Trennkupplung 3 mit dem Läufer 4 einer elektrischen Maschine 5 koppelbar ist. Der Läufer 4 der elektrischen Maschine 5 ist ferner über eine Anfahrkupplung 6 mit einem Automatikgetriebe 7 koppelbar. Bei geschlossener Trennkupplung 3 ist der Verbrennungsmotor 1 mit der Eingangswelle des Automatikgetriebes 7 gekoppelt. Sind die Trennkupplung 3 und gleichzeitig die Anfahrkupplung 6 geschlossen, so ist eine Kraftübertragung über das Automatikgetriebe 7 auf eine Getriebeausgangswelle 8 möglich.

Das Automatikgetriebe 7 weist eine Vielzahl hier nicht näher dargestellter Aktuatoren, z. B. Kupplungen bzw. Bremsen auf, die durch ein ebenfalls hier nicht näher dargestelltes Getriebesteuergerät angesteuert werden. Tritt im Getriebesteuergerät bzw. in der Aktuatorik eine Störung auf, so ist vorgesehen, dass die Trennkupplung 3 durch eine Trennkupplungshaltehydraulik und die Anfahrkupplung 6 durch eine Anfahrkupplungshaltehydraulik zunächst in geschlossenem Zustand gehalten werden, so dass das Fahrzeug weiterhin verbrennungsmotorisch angetrieben werden kann.

Es kann vorgesehen sein, dass bei einer Störung der Getriebesteuerung bzw. einer Störung in der Getriebeaktuatorik das Automatikgetriebe mechanisch und/oder hydraulisch gesteuert in einen definierten Notbetriebszustand, z.B. in eine vorgegebene Übersetzung schaltet, mit der zumindest ein Weiterfahren ermöglicht wird.

Ferner kann vorgesehen sein, dass bei Absinkend der Drehzahl des Verbrennungsmotors 1 die Trennkupplungshaltehydraulik die Trennkupplung 3 öffnet, was dann nur noch ein rein elektrisches Weiterfahren ermöglicht. Dies sollte aber ausreichen, um das Fahrzeug an einer verkehrsmäßig sicheren Stelle abzustellen. Spätestens beim Öffnen der Trennkupplungshaltehydraulik wird eine elektrische Zusatzölpumpe 9 eingeschaltet, die den zum Zuhalten der Anfahrkupplung 6 erforderlichen Öldruck erzeugt.

## Patentansprüche

1. Hybridfahrzeug, mit einem Verbrennungsmotor (1) und einem Automatikgetriebe (7) mit einer elektrischen Getriebesteuerung und mehreren von der elektrischen Getriebesteuerung angesteuerten Getriebeaktuatoren, wobei im Antriebstrang zwischen dem Verbrennungsmotor (1) und dem Automatikgetriebe (7) eine elektrische Maschine (5) und eine Trennkupplung (3) angeordnet ist, über die die elektrische Maschine (5) mit dem Verbrennungsmotor (1) koppelbar ist, und wobei auf der dem Automatikgetriebe (7) zugewandten Seite der elektrischen Maschine (5) im Antriebsstrang eine Anfahrkupplung (6) angeordnet ist,
**dadurch gekennzeichnet, dass** bei einer in der Getriebesteuerung bzw. in der Getriebeaktuatorik auftretenden Störung aus einem Zustand heraus, in dem die Trennkupplung (3) und die Anfahrkupplung (6) geschlossen ist, die Trennkupplung (3) mittels einer Trennkupplungshaltehydraulik und die Anfahrkupplung (6) mittels einer Anfahrkupplungshydraulik in einem geschlossenen Zustand gehalten wird.

2. Hybridfahrzeug nach Anspruch 1, **dadurch gekennzeichnet, dass** die Trennkupplungshaltehydraulik die Trennkupplung (3) öffnet bzw. freigibt, wenn die Drehzahl des Verbrennungsmotors (1) eine vorgegebene Drehzahl unterschreitet.

3. Hybridfahrzeug nach Anspruch 2, **dadurch gekennzeichnet, dass** eine elektrische Ölpumpe (9) vorgesehen ist, welche spätestens kurz vor dem Öffnen der Trennkupplung (3) Öldruck zur Versorgung der Anfahrkupplungshaltehydraulik erzeugt, so dass die Anfahrkupplung (6) auch nach dem Öffnen der Trennkupplung (3) geschlossen gehalten werden kann.

## Claims

1. A hydraulic vehicle comprising an internal combustion engine (1) and an automatic gear unit (7) with an electric control system and a number of gear actuators operated by the control system, wherein an electric machine (5) is disposed in the line of drive between the engine (1) and the automatic gear unit (7) and also a switching clutch (3) for connecting the electric machine (5) to the engine (1), wherein a starting clutch (6) is disposed in the line of drive on the side of the electric machine (5) facing the automatic gear unit (7), **characterised in that** in the event of a fault in the control unit or in the actuator system, starting from a state in which the switching clutch (3) and the starting clutch (6) are closed, the switching clutch (3) and the starting clutch (6) are held in a closed state by respective hydraulic units.

2. A hydraulic vehicle according to claim 1, **characterised in that** the switching-clutch hydraulic unit opens or releases the switching clutch (3) when the speed of the engine (1) falls below a set speed.

3. A hydraulic vehicle according to claim 2, **characterised in that** an electric oil pump is provided and generates an oil pressure for supplying the starting-clutch hydraulic unit, not later than shortly before the switching clutch (3) is opened, so that the starting clutch (6) can be closed even after the switching clutch (3) has been opened.

## Revendications

1. Véhicule hybride équipé d'un moteur thermique (1) et d'une boîte de vitesses automatique (7) ainsi que d'une commande électrique de boîte de vitesses et plusieurs actionneurs de boîte de vitesses commandés par la commande électrique de boîte de vitesses,
la ligne de transmission entre le moteur thermique (1) et la boîte de vitesses automatique (7) étant équipée d'un moteur électrique (5) et d'un embrayage de coupure (3) pour coupler le moteur électrique (5) au moteur thermique (1), et
du côté du moteur électrique (5) tourné vers la boîte de vitesses automatique (7), la ligne de transmission comporte un embrayage de démarrage (6),
véhicule **caractérisé en ce qu'**
en cas d'incident dans la commande de boîte de vitesses ou dans les actionneurs de boîte de vitesses, on quitte un état dans lequel l'embrayage de coupure (3) et l'embrayage de démarrage (6) sont fermés, pour un état dans lequel l'embrayage de coupure (3) est maintenu fermé par l'hydraulique de maintien de l'embrayage de coupure et l'embrayage de démarrage (6) par l'hydraulique d'embrayage de démarrage.

2. Véhicule hybride selon la revendication 1,
**caractérisé en ce que**
l'hydraulique de maintien de l'embrayage de coupure ouvre ou libère l'embrayage de coupure (3) si la vitesse de rotation du moteur thermique (1) passe en dessous d'une vitesse de rotation prédéfinie.

3. Véhicule hybride selon la revendication 2,
**caractérisé par**
une pompe à huile électrique (9) qui génère au plus tard juste avant l'ouverture de l'embrayage de coupure (3), une pression d'huile pour alimenter l'hydraulique de maintien de l'embrayage de démarrage de façon que l'embrayage de démarrage (6) puisse être maintenu fermé même après l'ouverture de l'embrayage de coupure (3).
